Europäisches Patentamt

European Patent Office

Office européen des brevets

(11) Veröffentlichungsnummer: **0 126 222**
**B1**

(12) **EUROPÄISCHE PATENTSCHRIFT**

(45) Veröffentlichungstag der Patentschrift: **30.05.90**

(51) Int. Cl.⁵: **B 60 K 17/34**

(21) Anmeldenummer: **84102089.4**

(22) Anmeldetag: **29.02.84**

(54) Antrieb für Fahrzeuge, insbesondere Allradantrieb für Kraftfahrzeuge.

(30) Priorität: **19.05.83 DE 3318251**

(43) Veröffentlichungstag der Anmeldung:
**28.11.84 Patentblatt 84/48**

(45) Bekanntmachung des Hinweises auf die
Patenterteilung:
**30.05.90 Patentblatt 90/22**

(84) Benannte Vertragsstaaten:
**DE FR GB IT NL SE**

(56) Entgegenhaltungen:
**FR-A-1 489 031**
**FR-E- 94 265**
**GB-A-2 035 930**
**GB-A-2 074 516**
**GB-A-2 098 148**
**US-A-2 913 928**
**US-A-2 936 036**

(73) Patentinhaber: **Dr.Ing.h.c. F. Porsche**
**Aktiengesellschaft**
**Porschestrasse 42**
**D-7000 Stuttgart 40 (DE)**

(72) Erfinder: **Tutzer, Peter, Dr.**
**Holbeinstrasse 14**
**D-7014 Kornwestheim (DE)**

EP 0 126 222 B1

Courier Press, Leamington Spa, England.

**Beschreibung**

Die Erfindung bezieht sich auf einen Antrieb für Fahrzeuge nach dem Oberbegriff des Anspruchs 1.

Aus der EP-A 43 806 ist ein Allradantrieb für Kraftfahrzeuge mmit einem quer zur Fahrzeuglängsachse eingebauten Motor bekannt geworden, das ein als Planetengetriebe ausgeführtes Verteilergetriebe mit Zwischendifferential umfaßt. Bei diesem Verteilergetriebe fließt die Leistung von der Ausgangswelle des Schaltgetriebes über ein Hohlrad in die Planetenräder, von denen die Leistungsverzweigung zum Antrieb der Vorder- und Hinterachse erfolgt. Mit einer derartigen Ausführung eines Verteilergetriebes sind aufgrund des Leistungseinflusses ins Hohlrad sowie der Ableitung der Leistung über das Differential einerseits und über den Planetenträger zum Ritzel andererseits nur begrenzte Verhältnisse der Antriebsdrehmomente von Vorderachse zu Hinterachse möglich. Insbesondere ist diese Ausführung für den Zweck ausgelegt, daß an der Hinterachse ein größeres Antriebsdrehmoment herrschen soll als an der Vorderachse bei quer zur Fahrtrichtung eingebautem Frontmotor. Aus der GB-A 20 98 148 ist ein Vierradantrieb für Kraftfahrzeuge bekannt, der quer zur Fahrzeuglängsachse eingebaut ist und mit einer Getriebeausgangswelle ein Verteilergetriebe mit Zwischendifferential verbunden ist. Das Verteilergetriebe ist als Planetengetriebe ausgeführt und die Planetenräder des Getriebes sind zu einem leistungsverteilten Achsabtrieb mit einem Hohlrad und einem Sonnenrad im Treibeingriff. Über eine Kupplung ist der Achsabtrieb sperrbar.

Aufgabe der Erfindung ist es, einen Antrieb, insbesondere einen Allradantrieb für ein Kraftfahrzeug zu schaffen, der einen geringen Raumbedarf hat und eine große Variationsmöglichkeit der Leistungsverteilung zu den beiden Fahrzeugachsen zuläßt. Ferner soll die Lage des Antriebs für die zweite Achse ohne Beeinträchtigung der Leistungsverteilung, je nach Bauart des Kraftfahrzeugs, variierbar sein.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß durch die Möglichkeit sowohl der Änderung der Standübersetzung als auch der Wahl des angetriebenen Gliedes des Stirnrad-Planetengetriebes eine breite Variationsmöglichkeit der Leistungsverteilung zu den Achsen erzielt wird. So ist durch die erfindungsgemäße Anordnung und Ausbildung des Verteilergetriebes bei einem Kraftfahrzeug mit Heckmotor eine Momentverteilung z.B. von 70% an der Hinterachse und 30% an der Vorderachse erzielbar. Ferner kann die Lage der Antriebswelle für die zweite Fahrzeugachse in einem bestimmten Maße den bauartbedingten Platzverhältnissen des Fahrzeugs angepaßt werden, indem das Verteilergetriebe mit Zwischendifferential versetzt eingebaut wird.

Ein Ausführungsbeispiel der Erfindung ist in der Zeichnung dargestellt und wird im folgenden näher beschrieben.

Es zeigt:

Fig. 1 einen Schnitt durch ein Verteilergetriebe mit Zwischendifferential und Achsdifferential an einer vorderen oder hinteren Fahrzeugachse und

Fig. 2 eine Ausführungsvariante des Verteilergetriebes nach Fig. 2.

Der Antrieb für ein Kraftfahrzeug weist einen quer zur Fahrzeuglängsachse stehendes Schaltgetriebe und einen ebenfalls quer angeordneten Motor auf, dessen Ausgangswelle im wesentlichen achsparallel zu der Ein- und Ausgangswelle des Schaltgetriebes angeordnet ist. Der Motor kann als Front-, Heck- oder Mittelmotor eingebaut sein und eine Quer- oder Längslage aufweisen. Neben einem Achsdifferential an jeder Fahrzeugachse ist ein Verteilergetriebe 1 mit einem Zwischendifferential vorgesehen. Dieses ist mit einem Stirnrad 10 auf einer Ausgangswelle 2 des Schaltgetriebes antriebsverbunden. Einzelheiten des Schaltgetriebes, des Motors sowie des Achsdifferentials sind nicht gezeigt, da diese für die Erfindung nicht von Bedeutung sind.

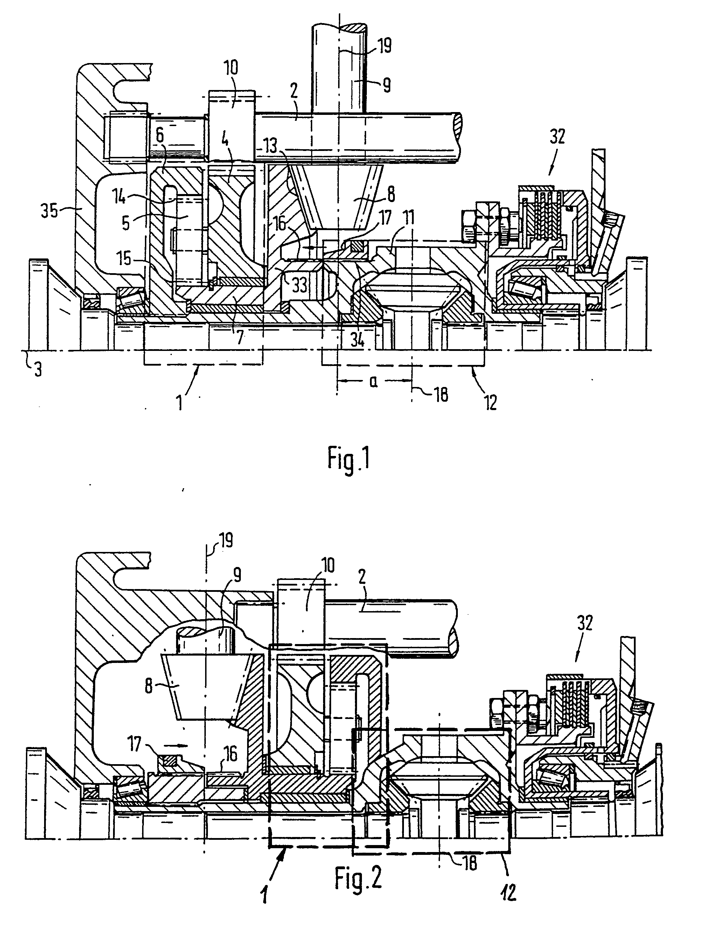

Das Verteilergetriebe 1 ist als Stirnrad-Planetengetriebe ausgeführt, dessen Achse mit der Radachse 3 zusammenfällt. Es umfaßt gemäß der Figuren 1 und 2 einen außenverzahnten Planetenträger 4 mit Planetenrädern 5 sowie ein Hohlrad 6 und ein Sonnenrad 7. Über ein Ritzel 8, das mit einer Treibwelle 9 verbunden ist, erfolgt der Antrieb einer weiteren Fahrzeugachse. Dies kann entsprechend der Anordnung des Verteilergetriebes eine Vorder- oder Hinterachse sein.

Bei der Anordnung gemäß der Figuren 1 und 2 fließt die Leistung von der Ausgangswelle 2 des Schaltgetriebes über das Stirnrad 10 in den Planetenträger 4 und von dort in die Planetenräder 5. An diesem erfolgt eine Leistungsverzweigung, in dem sowohl das Hohlrad 6 als auch das Sonnenrad 7 angetrieben werden. Der Differentialkorb 11 des Achsdifferentials 12 einer Fahrzeugachse, die mit der Planetengetriebeachse zusammenfällt, ist mit dem Hohlrad 6 starr verbunden. Diese Fahrzeugachse wird deshalb mit der Leistung beaufschlagt, die dem Hohlrad 6 zugeordnet ist. das Sonnenrad 7 treibt über ein Tellerrad 13 und das Ritzel 8 die andere Fahrzeugachse an, der somit die Leistung zufließt, die dem Sonnenrad 7 zugeordnet ist.

Das Hohlrad 6 weist eine Innenverzahnung 14 auf, die der Innenverzahnung 15 des Sonnenrads 7 gegenübersteht, wobei das Sonnenrad 7 drehbar auf dem Korb 11 des Achsdifferentials 12 gelagert ist. Auf dem Sonnenrad 7 ist der Planetenträger 4 drehbar angeordnet, der sich an seinem Ansatz 33 des Sonnenrades 7 in einer axialen Richtung abstützt. In der anderen axialen Richtung ist ein Abstützring vorgesehen.

Das Sonnenrad 7 gemäß der Figuren 1 und 2 weist eine radiale Erstreckung auf, an der das Ritzel 8 sowie eine Verzahnung 16 für eine Sperrenkupplung 17 vorgesehen ist.

Das Zwischendifferential ist über diese Kupplung 17 sperrbar, indem das Sonnenrad 7 über seine Verzahnung 16 starr mit dem Differentialkorb 11 verbunden wird. Im vorliegenden Fall erfolgt dies durch eine verschiebbare Schaltmuffe. Zum Sperren des Achsdifferentials 12 ist eine durch Öldruck betätigbare Lamellensperre 32 vorgesehen.

Bei der weiteren Ausführung nach Figur 2 ist ein Verteilergetriebe 1 mit Zwischendifferential entsprechend Fig. 1 vorgesehen. Unterschiedlich zu der Ausführung nach Figur 1 ist, daß die Welle 9 durch eine Umsetzung des Planetensatzes in ihrer Lage zum Achsdifferential 12 variierbar ist. So kann, je nach Bauart des Fahrzeugs, der Abstand a zwischen der Längs-Achse 18 des Achsdifferentials 12 und der Längsachse 19 der Treibwelle 9 vergrößert bzw. verkleinert werden.

## Patentansprüche

1. Antrieb für Fahrzeuge, insbesondere Allradantrieb für Kraftfahrzeuge mit einem Motor, der insbesondere quer zur Fahrzeuglängsachse eingebaut ist und dessen Ausgangswelle (2) im wesentlichen achsparallel zu einer Ein- und Ausgangswelle eines Schaltgetriebes liegt, über das mittels Zahnradpaaren auf den Wellen verschiedene Drehzahlverhältnisse herstellbar sind und daß mit der Getriebeausgangswelle (2) ein Verteilergetriebe (1) mit Zwischendifferential verbunden ist, deren Getriebeachse mit einer Fahrzeugachse zusammenfällt und daß das Zwischendifferential und das Achsdifferential (12) über eine Kupplung (17) sperrbar sind, wobei das Verteilergetriebe (1) als Stirnrad-Planetengetriebe ausgeführt ist und Planetenräder (5) des Getriebes zu einem leistungsverteilten Achsabtrieb mit einem Hohlrad (6) und mit einem Sonnenrad (7) im Treibeingriff stehen, dadurch gekennzeichnet, daß das Getriebe (1) einen außenverzahnten Planetenträger (4) umfaßt der mit einem auf einer achsparallel angeordneten Ausgangswelle (2) des Getriebes angeordnetem Stirnrad (10) in Wirkverbindung steht und die Planetenräder des Trägers (4) zwischen den starr mit einem Korb (11) des Achsdifferentials (12) einer Fahrzeugachse verbundenem Hohlrad (6) und einem drehbar auf dem Korb (11) des Achsdifferentials (12) gelagerten Sonnenrad (7) angeordnet sind und der Achsabtrieb zu einer ersten Fahrzeugachse über das Hohlrad (6) und der weitere Achsabtrieb zu einer zweiten Fahrzeugachse über das Sonnenrad (7) erfolgt.

2. Antrieb nach Anspruch 1, dadurch gekennzeichnet, daß der Planetenträger (4) drehbar auf dem Sonnenrad (7) zwischen der Innenverzahnung (15) und einem Ansatz (33) des Sonnenrades (7) gehalten und an diesem in einer axialen Richtung abgestützt ist.

3. Antrieb nach den Ansprüchen 1 oder 2, dadurch gekennzeichnet, daß das Sonnenrad (7) einen Achsabtrieb (13) sowie eine Verzahnung (16) zum Eingriff für eine Sperrkupplung (17) aufweist, die am Differentialkorb (11) in einer höhengleichen Verzahnung (34) gehalten ist.

4. Antrieb nach Anspruch 1, dadurch gekennzeichnet, daß der Achsabtrieb im Sonnenrad (7) als Tellerrad (13) ausgeführt ist, das mit einem Ritzel (8) einer Triebwelle (9) für eine vordere oder hintere Fahrzeugachse drehmomentübertragend verbunden wird.

5. Antrieb nach einem oder mehreren der vorhergehenden Ansprüche, dadurch gekennzeichnet, daß das Verteilergetriebe (1) mit Zwischendifferential zwischen einer Wand (35) des Gehäuses und dem Ritzel (8) angeordnet ist und das Ritzel (8) benachbart des Achsdifferentials (12) liegt, wobei zwischen der Längsachse (19) des Ritzels (8) und der Längsachse (18) des Achsdifferentials (12) ein Abstand (a) besteht.

6. Antrieb nach einem oder mehreren der vorhergehenden Ansprüche, dadurch gekennzeichnet, daß das Verteilergetriebe (1) mit Zwischendifferential zwischen dem Ritzel (8) und dem Achsdifferential (12) angeordnet ist und das Ritzel (8) benachbart der Gehäusewand (35) liegt.

## Revendications

1. Système de transmission pour véhicules automobiles, en particulier avec traction sur les quatres roues avec un moteur, qui est notamment monté perpendiculairement à l'axe longitudinal du véhicule avec son arbre de sortie (2) essentiellement parallèle à un arbre d'entrée et de sortie d'une boîte de vitesses permettant, grâce à des paires d'engrenages convenables, de déterminer différents rapports de vitesses entre lesdits arbres d'entrée et de sortie, où l'arbre de sortie (2) de la boîte de vitesses est liée à un dispositif répartiteur (1) comprenant un différentiel intermédiaire alligné axialement avec l'un des essieux du véhicule et où le différentiel intermédiaire et le différentiel d'essieu (12) peuvent être bloqués au moyen d'un crabotage (17), le dispositif répartiteur (1) étant réalisé sous la forme d'un entraînement planétaire avec des roues à denture droite et dont les satellites (5) sont en prise pour réaliser une répartition de la puissance transmise, entre les deux essieux, avec une roue à denture interne (6) et avec une roue planète (7), caractérisé par le fait que le dispositif répartiteur (1) comprend un porte-satellites (4) avec un denture extérieure qui est en prise avec un pignon à denture droite (10) disposé sur un arbre de sortie (2) de la boîte de vitesses et que les roues satellites du support (4) sont disposées entre une roue à denture interne (6) liée rigidement à la coquille (11) du différentiel (12) de l'essieu considéré et une roue planète (7) tournant librement sur la coquille (11) du différentiel (12) de l'essieu, la sortie pour l'entraînement d'un premier essieu se faisant par la roue à denture interne (6) et pour l'entraînement de l'autre essieu, par la roue planète (7).

2. Système de transmission selon la revendication 1, caractérisé par le fait que le porte-satellites (4) est monté tournant sur la roue planète (7) entre la denture externe (15) et un épaulement (33) de la roue planète (7) et qu'il prend appui sur ledit épaulement dans le sens axial.

3. Système de transmission selon les revendications 1 ou 2, caractérisé par le fait que la roue planète (7) comporte des dispositions (13) pour l'entraînement d'un autre essieu ainsi qu'une denture (16) venant en prise avec un système de crabotage de blocage (17) qui est disposé sur la coquille du différentiel (11) sur une denture de hauteur identique (34).

4. Système de transmission selon la revendication 1, caractérisé par le fait que sur la roue planète (7) la sortie d'entraînement d'essieu est constituée par une grande couronne (13), qui est en prise avec le pignon (8) d'un arbre de transmission (9) lié pour la transmission du couple à l'essieu avant ou à l'essieu arrière.

5. Système de transmission selon une ou plusieurs des revendications ci-dessus, caractérisé par le fait que le dispositif répartiteur (1) avec le différentiel intermédiaire est disposé entre une paroi (35) du carter et le pignon (8) et que le pignon (8) se trouve à côté du différentiel d'essieu (12), une distance (a) restant ménagée entre l'axe longitudinal (19) du pignon (8) et l'axe longitudinal (18) du différentiel d'essieu (12).

6. Système d'entraînement selon une ou plusieurs des revendications ci-dessus, caractérisé par le fait que le dispositif répartiteur (1) avec le différentiel intermédiaire est disposé entre le pignon (8) et le différentiel d'essieu (12) et que le pignon (8) se trouve au voisinage de la paroi (35) du carter.

**Claims**

1. A drive for vehicles, in particular an all-wheel drive for motor vehicles, having an engine which is mounted in particular transversely to the longitudinal axis of the vehicle and the output shaft (2) of which is essentially axially parallel to an input and output shaft of a gear-shift transmission by way of which different speed ratios can be produced by means of pairs of gearwheels on the shafts, a distributor transmission (1) with an intermediate differential bsing connected to the output shaft (2) of the transmission, the axis of which coincides with an axle of the vehicle, and the intermediate differential and the axle differential (12) being lockable by way of a clutch (17), the distributor transmission (1) being constructed in the form of a spur-gear planetary gear transmission, and planetary gears (5) of the transmission being in driving engagement to form a power-distributed axial drive with a ring gear (6) and a sun gear (7), characterized in that the transmission (1) comprises an externally toothed planetary gear carrier (4) which is in operative engagement with a spur wheel (10) mounted on an output shaft (2) — mounted axially parallel — of the transmission, and the planetary gears of the carrier (4) are arranged between the ring gear (6), which is rigidly connected to a cage (11) of the differential (12) of an axle of the vehicle, and a sun gear (7), which is mounted rotatably on the cage (11) of the axle differential (12), and the drive to a first axle of the vehicle is effected by way of the ring gear (6) and the further drive to a second axle of the vehicle is effected by way of the sun gear (7).

2. A drive according to Claim 1, characterized in that the planetary gear carrier (4) is held rotatably on the sun gear (7) between the internal toothing (15) and an attachment (33) of the sun gear (7) and is supported thereon in an axial direction.

3. A drive according to Claim 1 or 2, characterized in that the sun gear (7) comprises an axial drive (13) and a toothing (16) for engagement with a locking clutch (17) which is held on the differential cage (11) in a toothing (34) at the same level.

4. A drive according to Claim 1, characterized in that the axial drive in the sun gear (7) is constructed as a crown gear (13) which is connected to a pinion (8) of a drive shaft (9) for a front or rear axle of the vehicle so as to transmit torque.

5. A drive according to one or more of the preceding Claims, characterized in that the distributor transmission (1) with the intermediate differential is arranged between a wall (35) of the housing and the pinion (8), and the pinion (8) is situated adjacent the axle differential (12), a gap (a) being provided between the longitudinal axis (19) of the pinion (8) and the longitudinal axis (18) of the axle differential (12).

6. A drive according to one or more of the preceding Claims, characterized in that the distributor transmission (1) with the intermediate differential is arranged between the pinion (8) and the axle differential (12), and the pinion (8) is situated adjacent the housing wall (35).

Fig.1

Fig.2